(19) Europäisches Patentamt
European Patent Office
Office européen des brevets

(11) **EP 3 148 069 A1**

(12) **EUROPÄISCHE PATENTANMELDUNG**

(43) Veröffentlichungstag:
**29.03.2017 Patentblatt 2017/13**

(51) Int Cl.:
*H02N 11/00* (2006.01)　　　*H01Q 9/32* (2006.01)

(21) Anmeldenummer: **15001800.0**

(22) Anmeldetag: **29.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Michael Freiherr, von Solemacher-Antweiler 80997 München (DE)**

(72) Erfinder: **Michael Freiherr, von Solemacher-Antweiler 80997 München (DE)**

Bemerkungen:
Die Patentansprüche wurden nach dem Anmeldetag eingereicht (R. 68(4) EPÜ).

(54) **NUTZBARMACHUNG DER ELEKTRISCHEN ENERGIE AUS DER IONOSPHÄRE**

(57)　An einer Antenne liegt eine gemessene Eingangsspannung $U_e$ von 1,0 V. Diese Eingangsspannung $U_e$ ist auch für einen Frequenzumrichter die Eingangsspannung. Durch den Frequenzumrichter wird eine Frequenz von 3,0 MHz auf 50 Hz zurückgefahren. An dem Ausgang des Frequenzumrichters liegt eine Spannung $U_2$, die höher ist als $U_e$. Gleichzeitig ist $U_2$ die Eingangsspannung des Steuerkreises eines Transduktors. Durch eine gekoppelte Drossel T wird im Lastkreis des Transduktors mit Hilfe des Potentiometers R im Steuerkreis der Strom kontinuierlich so verändert, dass sich im Laststromkreis des Transduktors eine Ausgangsspannung $U_a$ auf 220 V einstellt. Dann kann ein handelsüblicher Universalmotor betrieben werden.

6.4. Gesamtschaltung (4.Zeichnung von 4)

**Beschreibung**

1. <u>Antenne</u> (siehe Zeichnung 1 von 4, Seite 7)

Die Atmosphaere der Erde ist eine Gashuelle und besteht aus 5 Schichten: der Troposhaere, der Stratosphaere, der Mesosphaere, der Ionosphaere und der Exosphaere.

Die Ionosphaere liegt ca. 80 km vom Erdboden und reicht bis ca. 400 km hoch vom Erdboden.

Sie besteht aus der D-, aus der E-, aus der $F_1$ - und aus der $F_2$- Schicht.

Die wichtigste Schicht ist die sogenannte Heaviside-Schicht (E-Schicht) : An ihr werden die Radiowellen reflektiert.

$$\vec{E}, \vec{H} = \text{Elektromagnetisches Feld der Ionosphaere}$$

Das elektromagnetische Feld, das senkrecht auf die Erdoberflaeche wirkt, schwingt mit einer Frequenz f von ca. 3,0 MHz **(E-Schicht)** (LUEGER, Lexikon der Technik, Band 2, 1960 Deutsche Verlags-Anstalt GmbH, Stuttgart).

$$\text{Wellenlaenge } \lambda = \text{ Lichtgeschwindigkeit c / Frequenz f } = 299\ 792\ 458 \text{ m /sec } 3,0 \times 10^{6} \text{Hz}$$
$$= 99,9 \text{ m}$$

$$\text{Berechnete Antennenhoehe h} = \lambda\ / 64 = 99,9 \text{ m} / 64 = 1,56 \text{ m} .$$

Die darauf abgestimmte Antenne ist mit ihr in Resonanz, die maximal gemessene Ausgangsspannung $\underline{U}$ = 1,0 V ist eine Wechselspannung, wird aber vom Messgeraet faelschlicherweise als Gleichspannung erkannt, weil die Frequenz der elektrischen Feldstaerke E so hoch ist.

Die induzierte Spannung hat an der Antennenspitze ein Maximum und verlaeuft entlang der Antenne in der Form einer Parabel und ist am Erdungspunkt Null.

Beim Strom ist es genau umgekehrt.

Bei der Messung der Eingangsspannung wurde ein einfacher Stab mit der Laenge h = 1,56 m aus Eisen in die Erde gesteckt. Bei Realisierung der Schaltung muss der Innenwiderstand $\underline{Z}_i$ der Antenne genau berechnet werden.

Eine Antenne kann man bekanntlich geerdet und ungeerdet betreiben !

2. <u>Frequenzumrichter</u> (siehe Zeichnung 2 von 4, Seite 8)

Die Frequenz der in der Antenne induzierten Spannung $\underline{U}_e$=1,0 V ist ca. 3,0 MHz. Diese Frequenz muss auf 50 Hz mittels eines Frequenzumrichters zurueckgefahren werden. Die Schaltung dazu habe ich der "Fachkunde Elektrotechnik" (Europa-Lehrmittel 2000) Entnommen.

Damit eine Schwingschaltung (Oszillator) nur mit einer bestimmten Frequenz erregt wird, muss in den Ausgangskreis bzw. in den <u>Rueckkopplungszweig</u> ein <u>frequenzabhaengiges</u> Schaltglied z. B. ein RC - Glied eingebaut werden.

Es gilt:

$$X = 1/\omega C = 1/2\pi f\,C \implies C = 1/2\pi f\,X \implies C \sim 1/f .$$

Mit einem frequenzbestimmenden Glied, hier C, kann der Oszillator auf die gewuenschte Frequenz f = 50 Hz abgestimmt werden. -

Wenn der Phasenverschiebungswinkel y zwischen rueckgekoppelter Spannung und Eingangsspannung ($\underline{U}_e$ 1,0 V) $y_K$ = 0 wird <u>(Phasenbedingung),</u> dann ist durch Aenderung des Kondensators $C_x$ die <u>Selbsterregung</u> des Oszillators genau erfuellt -

Bei Realisierung der Schaltung muessen die Bauelemente der Schaltung genau berechnet werden !

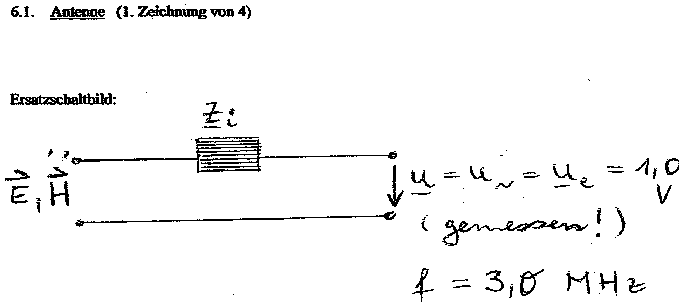

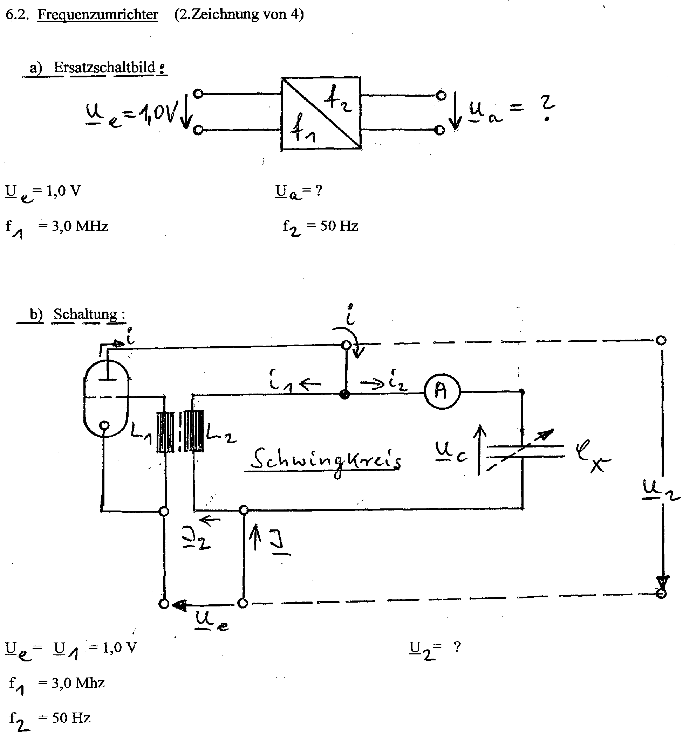

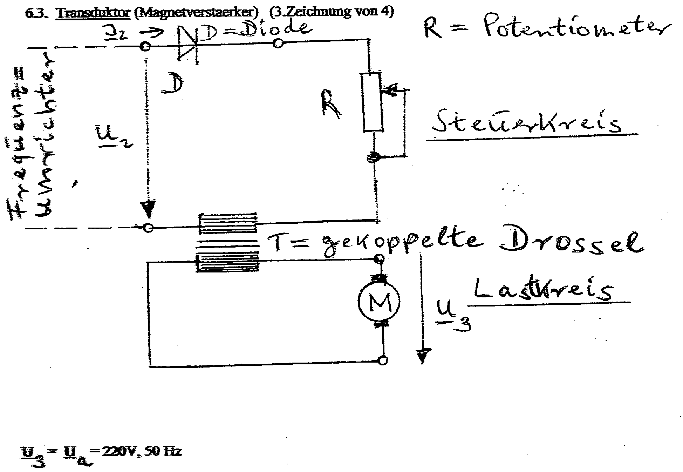

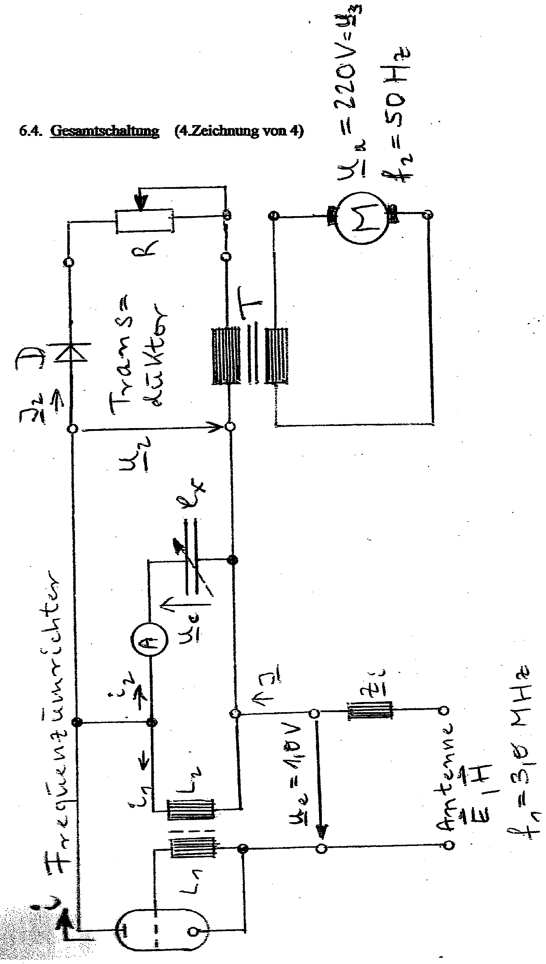

3. <u>Transduktor</u> (Magnetverstaerker) (siehe Zeichnung 3 von 4, Seite 9)

Die Ausgangsspannung $U_2$ des Frequenzumrichters, die etwas hoeher liegen duerfte, als die gemessene Eingangsspannung $U_e$ = 1,0 V (ist gleichzeitig die induzierte Spannung an der Antenne), muss jetzt transformiert werden auf 220 V, damit ein Universalmotor angeschlossen werden kann !

Dies geschieht durch einen Transduktor (Magnetverstärker).

Bei einem Transduktor handelt es sich um eine gekoppelte Drossel T, deren Induktivitaet durch Veraenderung der Vormagnetisierung eines Eisenkerns veraendert wird. Hierzu besitzt der Transduktor eine zweite Wicklung, die vom Steuerstrom durchflossen wird. Der Steuerstrom ist der Ausgangsstrom $\underline{I}$ des vorgeschalteten Frequenzumrichters (siehe Zeichnung 2 von 4, Seite 8 ) der durch die Diode D gleichgerichtet wird.

Durch Verstellung des Potentiometers R im Steuerkreis wird die Ausgangsspannung $\underline{U}_a = \underline{U}_3$ des Lastkreises auf 220 V eingestellt, sodass ein handelsueblicher Universalmotor angeschlossen werden kann !

Bei Realisierung der Schaltung muss sowohl die Diode D, als auch die gekoppelte Drossel T, als auch das Potentiometer R genau berechnet werden !

4. <u>Zusammenfassung</u> (siehe Zeichnung 4 von 4, Seite 10)

An der Antenne liegt eine gemessene Eingangsspannung $U_e$ von 1,0 V (siehe Zeichnung 1 von 4, Seite 7).

Diese Eingangsspannung $\underline{U}_e$ ist auch fuer den Frequenzumrichter die Eingangsspannung (siehe Zeichnung 2 von 4, Seite 8).

Durch den Frequenzumrichter wird die Eingangsfrequenz von 3,0 Mhz auf die Ausgangsfrequenz von 50 Hz zurueckgefahren.

Am Ausgang des Frequenzumrichters liegt die Spannung $\underline{U}_2$, die hoeher ist als $\underline{U}_e$.

Gleichzeitig ist $\underline{U}_2$ die Eingangsspannung des Transduktors.

Durch die gekoppelte Drossel T wird im Lastkreis des Transduktors mit Hilfe des Potentiometers R im Steuerkreis der Strom $\underline{I}_2$ kontinuierlich so veraendert, dass sich im Laststromkreis des Transduktors die Ausgangsspannung $\underline{U}_a = \underline{U}_3$ auf 220 V einstellt Dann kann ein handelsueblicher Universalmotor betrieben werden (siehe Zeichnung 4 von 4, Seite 10)!

Bei der erfolgreichen Realisierung der Gesamtschaltung wird das "Perpetuum mobile" Wirklichkeit!

**Patentansprüche**

**1.** Patentanspruch: "Antenne"

**2.** Patentanspruch: "Frequenzumrichter"

**3.** Patentanspruch: "Transduktor" (Magnetverstaerker)

**4.** Patentanspruch: "Gesamtschaltung"

### 6.1. Antenne (1. Zeichnung von 4)

Ersatzschaltbild:

$$\underline{Z}_i$$

$$\vec{E}, \vec{H}$$

$$\underline{u} = \underline{u}_\sim = \underline{u}_e = 1{,}0 \ V$$

( gemessen ! )

$$f = 3{,}0 \ MHz$$

4

## 6.2. Frequenzumrichter    (2.Zeichnung von 4)

### a)  Ersatzschaltbild :

$$\underline{U}_e = 1,0 V \downarrow \qquad \boxed{\begin{array}{c} f_2 \\ \diagdown \\ f_1 \end{array}} \qquad \downarrow \underline{U}_a = \,?$$

$\underline{U}_e = 1,0$ V              $\underline{U}_a = ?$

$f_1 \quad = 3,0$ MHz              $f_2 = 50$ Hz

### b)  Schaltung :

$\underline{U}_e = \underline{U}_1 = 1,0$ V              $\underline{U}_2 = \,?$

$f_1 \quad = 3,0$ Mhz

$f_2 \quad = 50$ Hz

5

6.3. Transduktor (Magnetverstaerker) (3.Zeichnung von 4)

R = Potentiometer

D = Diode

Steuerkreis

T = gekoppelte Drossel

Lastkreis

$U_3 = U_a = 220V, 50 Hz$

6.4. __Gesamtschaltung__   (4.Zeichnung von 4)

$\underline{U}_3 = 220V = \underline{U}_3$

$f_2 = 50\,Hz$

$f_1 = 3{,}6\,MHz$

Europäisches
Patentamt

European
Patent Office

Office européen
des brevets

**EUROPÄISCHER RECHERCHENBERICHT**

Nummer der Anmeldung

EP 15 00 1800

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/055409 A2 (RAUM EN TECHNOLOGIE GMBH & CO [DE]; JEBENS KLAUS [DE]) 16. Juni 2005 (2005-06-16) * das ganze Dokument * ----- | 1-4 | INV. H02N11/00 H01Q9/32 |
| X | Hans Meinke: "Taschenbuch der Hochfrequenztechnik Band 2: Komponenten 5. Auflage" In: "Taschenbuch der Hochfrequenztechnik", 1. Januar 1992 (1992-01-01), Berlin [u.a.] : Springer, DE, XP055344524, ISBN: 978-3-540-54715-0 Seiten N11-N15, * Seite N11, Absatz 4.1 - Seite N15 * ----- | 1 | |
| X | ROTHAMMEL KARL: "Antennenbuch (8. Auflage), AMATEURANTENNEN FUER DEN BEWEGLICHEN EINSATZ", ANTENNENBUCH, XX, XX, 1. Januar 1984 (1984-01-01), Seiten 514-525, XP002428247, * Seite 516, Absatz 28.2.2 - Seite 518 * ----- | 1 | |
| A | WO 2015/054472 A1 (EARTH EN INC [US]) 16. April 2015 (2015-04-16) * Seite 4, Zeile 22 - Seite 8, Zeile 29 * * Abbildungen 1-5 * * Zusammenfassung * ----- | 1-4 | RECHERCHIERTE SACHGEBIETE (IPC) H01Q H02N |
| A,D | Alfred Ehrhardt: "Lueger Lexikon der Technik" In: "Lueger Lexikon der Technik", 1. Januar 1960 (1960-01-01), Deutsche Verlags-Anstalt Stuttgart, Stuttgart, XP55345305, Seiten 265-268, * Seite 265 - Seite 268 * ----- -/-- | 1-4 | |

Der vorliegende Recherchenbericht wurde für alle Patentansprüche erstellt

| Recherchenort | Abschlußdatum der Recherche | Prüfer |
|---|---|---|
| München | 14. Februar 2017 | von Walter, Sven-Uwe |

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 15 00 1800

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | Klaus Tkotz: "Fachkunde Elektrotechnik" In: "Fachkunde Elektrotechnik", 1. Januar 2014 (2014-01-01), Verlag Europa-Lehrmittel, Haan-Gruiten, XP055345323, ISBN: 978-3-8085-3190-7 Seiten 270-273, * Seite 270 - Seite 273 * ----- | 1-4 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 14. Februar 2017 | von Walter, Sven-Uwe |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 1800

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2017

| Im Recherchenbericht angeführtes Patentdokument | Datum der Veröffentlichung | Mitglied(er) der Patentfamilie | Datum der Veröffentlichung |
|---|---|---|---|
| WO 2005055409 A2 | 16-06-2005 | DE 10356463 A1<br>WO 2005055409 A2 | 14-07-2005<br>16-06-2005 |
| WO 2015054472 A1 | 16-04-2015 | EP 3055919 A1<br>US 2015102675 A1<br>US 2015102676 A1<br>WO 2015054472 A1 | 17-08-2016<br>16-04-2015<br>16-04-2015<br>16-04-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Lexikon der Technik. Deutsche Verlags-Anstalt GmbH, 1960, vol. 2

- *Fachkunde Elektrotechnik,* 2000